# EUROPEAN PATENT SPECIFICATION

(11) **EP 2 666 199 B1**
(45) Date of publication and mention of the grant of the patent: **21.06.2017**
(21) Application number: 12701971.9
(22) Date of filing: 19.01.2012
(51) Int. Cl.: H01M 2/16, H01M 10/0525, H01M 10/42

(54) **LITHIUM BATTERY SEPARATOR WITH SHUTDOWN FUNCTION**
LITHIUMBATTERIESEPARATOR MIT ABSCHALTFUNKTION
SÉPARATEUR POUR PILE AU LITHIUM PRÉSENTANT UNE FONCTION D'ARRÊT

(30) Priority: 19.01.2011 US 201161434029 P; 09.12.2011 US 201161568680 P
(43) Date of publication of application: 27.11.2013
(73) Proprietor: E. I. du Pont de Nemours and Company, Wilmington, DE 19898 (US)
(72) Inventor: FRISK, Simon, Newark Delaware 19711 (US); LEVIT, Natalia, V., Glen Allen Virginia 23059 (US); ARORA, Pankaj, Chesterfield Virginia 23832 (US)
(74) Representative: Heinemann, Monica
(86) International application number: PCT/US2012/021863
(87) International publication number: WO 2012/100049

(56) References cited:
- US-A- 5 091 272
- US-B1- 6 447 958
- US-B2- 7 691 528
- CHO T H ET AL: "Battery performances and thermal stability of polyacrylonitrile nano-fiber-based nonwoven separators for Li-ion battery", JOURNAL OF POWER SOURCES, ELSEVIER SA, CH, vol. 181, no. 1, 15 June 2008 (2008-06-15) , pages 155-160, XP022651354, ISSN: 0378-7753, DOI: 10.1016/J.JPOWSOUR.2008.03.010 [retrieved on 2008-03-14]

## Description

### FIELD OF THE INVENTION

This invention is related to the field of separators for electrochemical cells and in particular to separators having a shutdown function and their use in batteries, especially in lithium ion batteries.

### BACKGROUND OF THE INVENTION

An important practical aspect of modern energy storage devices is ever-increasing energy density and power density. Safety has been found to be a major concern. Lithium ion cells currently in wide-spread commercial use are among the highest energy density batteries in common use and require multiple levels of safety devices, including external fuses and temperature sensors, that shut down a cell in case of overheating before a short circuit can occur as a result of the mechanical failure of the battery separator. There is therefore a need for separators for Li-ion batteries and other electrochemical cells, which maintain structural integrity (dimensional stability, low shrinkage) at high temperatures and also offer shutdown behavior by blocking the flow of ions through the separator above a certain temperature. The polyolefin (e.g. PE, PP) based microporous separators in present use offer shutdown properties but are limited in high temperature stability which is a disadvantage of these separators. At high temperatures, the softening and melting can lead to shutdown behavior and high shrinkage can lead to poor dimensional stability of the separator. The functionality of shutdown is therefore significantly diminished by high shrinkage and lower dimensional stability.

Separators without shutdown function are also known and are often required by the manufacturers of batteries. For example, high temperature nonwoven nanofiber separators made of polyimide offer exceptional high temperature stability and melt integrity but do not provide shutdown behavior A recent attempt to provide a battery separator having a shutdown mechanism is disclosed in U.S. Pat. No. 7,691,528. The separator comprises a porous carrier consisting mainly of a woven or non-woven glass or polymeric fabric having a layer of inorganic particles coated thereon and also a layer of shutdown particles bonded to the inorganic layer. However, one draw back of this approach is difficulty to make thin separator with uniform pore size distribution within highly non-uniform pore structures of the common fiber size nonwovens. The other disadvantage comes from the imperfect binding capacity of the inorganic particles to each other and to the nonwoven carrier, resulting in difficulty in the separator handling without inorganic particles coming loose during separator handling and battery manufacturing.

The present invention addresses the need that remains for Li and Li-ion batteries prepared from materials that meet the dimensional stability requirements and combine good electrochemical properties, such as high electrochemical stability, low ionic resistivity, good charge/discharge/recharge rates and hysteresis, low first cycle irreversible capacity loss and the like, with an ability to shutdown in the event of a raise in internal temperature, such as during a short circuit, while maintaining a sound structural integrity at elevated temperatures.

### SUMMARY OF THE INVENTION

The present invention is directed to a separator for electrochemical cells, especially lithium ion batteries, comprising nanofibers arranged into a nonwoven web comprising a coating layer composed of a plurality of thermoplastic particles, according to claim 1. In some embodiments, the nanofibers are polymeric nanofibers. The separator exhibits shutdown behavior as a decrease in ionic conductivity of at least 50% at a threshold temperature (or in other words, an increase in ionic resistance by at least 2 times) in comparison with the ionic conductivity of the separator at room temperature.

A first set of thermoplastic particles is coated on at least a portion of the surface of the nonwoven web, and in one embodiment, the entire surface of the web. "Coating" indicates herein that a porous layer composed of particles is formed on the surface of the nonwoven web. Optionally, the particles can be bonded or calendared or heat treated to improve the structural integrity of the coating. In one embodiment the porous layer comprises discrete particles that are bonded to the nonwoven web but not bonded to each other. In a further embodiment the porous layer of the invention comprises discrete particles that are bonded to at least one or even a plurality of other particles. In a still further embodiment the particles are partially or totally fused to form a continuous, or partially continuous porous layer.

The nonwoven web has a mean flow pore size of between 0.1 microns and 5 microns, and the number average particle size is at least equal to the mean flow pore size. The thickness of the coated nanoweb is less than 100 µm, and more preferred less than 50 µm, and even more preferred less than 25 µm, and even more preferred less than 15 µm. The particle size distribution can be normal, log-normal, symmetric or asymmetric about the mean and any other type of distribution. Preferably, the majority of the particles have a size greater than the mean flow pore size of the nanoweb. In a further embodiment of the invention, greater than 60% or even greater than 80% or 90% of the particles have a size greater than the mean flow pore size of the nanoweb. The maximum number average particle size in the coating is such that the target thickness of the coated nanoweb is not exceeded. The particles can be spherical, elongated, non-spherical or any other shape. The particle can be made of thermoplastic material, and preferably made of homopolymer or copolymer thermoplastic olefins or other thermoplastic polymers, oligomers, waxes or blends thereof. Polymers composing the particles can be branched, oxidized, or functionalized in other means know in the art. The particles can be produced by micronization, grinding, milling, prilling, electrospraying, or any other process known in the art. The particles can be colloidal particles. The set of particles can be composed of a blend of particles having different compositions, sizes, shapes, and functionalities.

In a further embodiment, the separator comprises a second set of particles coated onto a surface of the nonwoven web. The second set of particles may be coated either to the same surface as the first set or to the opposing surface. The number average particle size of the second set of particles is at least equal to the mean flow pore size of the nonwoven web. The maximum number average particle size of the second set of particles is such that the target thickness of the coated nanoweb is not exceeded.

In a further embodiment, the separator comprises a second set of particles coated to the surface formed by the first set of particles. Additional sets of particles can be subsequently coated to the coated nonwoven web forming a multilayered coating.

In a still further embodiment, the separator comprises polymeric nanofibers arranged onto a plurality of distinct nonwoven webs where the nonwoven webs are separated from each other by thermoplastic particles situated between the webs and coated to their surfaces. The plurality of webs may be two webs.

In a still further embodiment, the separator offers a shutdown functionality and is preferably structurally and dimensionally stable, as defined by a shrinkage of less than 10%, 5%, 2% or even 1% at temperatures up to 200°C to prevent electrical short circuiting due to the degradation or shrinkage of the separator.

The present invention further provides an electrochemical cell, especially lithium-ion batteries, which comprise a separator according to the present invention and a method of making such separators and electrochemical cells containing such separators.

### BRIEF DESCRIPTION OF THE DRAWINGS

Fig. 1 shows a schematic representation of a cell used for measuring the shutdown function of separators.
Fig. 2 shows a plot of resistance against temperature for a certain embodiment of the separator of the invention.

### DETAILED DESCRIPTION OF THE INVENTION

Applicants specifically incorporate the entire contents of all cited references in this disclosure. Further, when an amount, concentration, or other value or parameter is given as either a range, preferred range, or a list of upper preferable values and lower preferable values, this is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range. It is not intended that the scope of the invention be limited to the specific values recited when defining a range.

The term "nonwoven" means herein a web including a multitude of essentially randomly oriented fibers where no overall repeating structure can be discerned in the arrangement of fibers. The fibers can be bonded to each other, or can be unbonded and entangled to impart strength and integrity to the web. The fibers can be staple fibers or continuous fibers, and can comprise a single material or a multitude of materials, either as a combination of different fibers or as a combination of similar fibers each comprising of different materials. The fibers, including nanofibers, can be constructed of organic or inorganic materials or a blend thereof. The organic material of which the fiber is made can be a polymeric material.

The term "nanoweb" as applied to the present invention refers to a nonwoven web constructed predominantly of nanofibers. "Predominantly" means that greater than 50% of the fibers in the web are nanofibers, where the term "nanofibers" as used herein refers to fibers having a number average diameter less than 1000 nm, even less than 800 nm, even between about 50 nm and 500 nm, and even between about 100 nm and 400 nm. In the case of non-round cross-sectional nanofibers, the term "diameter" as used herein refers to the greatest cross-sectional dimension. The nanoweb of the invention can also have greater than 70%, or greater than 90% or it can even contain 100% of nanofibers.

In some embodiments of the present invention, the nanofibers employed may comprise and preferably consist essentially of, or alternatively consist only of, one or more fully aromatic polyimides. For example, the nanofibers employed in this invention may be prepared from more than 80 wt% of one or more fully aromatic polyimides, more than 90 wt% of one or more fully aromatic polyimides, more than 95 wt% of one or more fully aromatic polyimides, more than 99 wt% of one or more fully aromatic polyimides, more than 99.9 wt% of one or more fully aromatic polyimides, or 100 wt% of one or more fully aromatic polyimides.

The article of the invention may comprise a polyimide nanoweb and a separator manufactured from the nanoweb that exhibits a shutdown property. The invention further provides an electrochemical cell, especially a lithium ion battery, that comprises the article of the invention, namely the polyimide nanoweb separator that exhibits a shutdown property as the separator between a first electrode material and a second electrode material. Electrochemical cells mentioned herein may be lithium primary batteries, lithium ion batteries, capacitors, etc. Lithium and lithium ion batteries are especially preferred in the present invention.

Nanowebs may be fabricated by a process selected from the group consisting of electroblowing, electrospinning, and melt blowing. Electroblowing of polymer solutions to form a nanoweb is described in detail by Kim et al. in World Patent Publication No. WO 03/080905, corresponding to U.S. Patent Application No. 10/477,882, incorporated herein by reference in its entirety. The electroblowing process in summary comprises the steps of feeding a polymer solution, which is dissolved into a given solvent, to a first spinning nozzle; discharging the polymer solution via the spinning nozzle, into an electric field, while injecting compressed air through a separate second nozzle adjacent to the spinning nozzle such that the compressed air impinges on the polymer solution as it is discharged from the lower end of the spinning nozzle; and spinning the polymer solution on a grounded suction collector under the spinning nozzle.

A high voltage may be applied to either the first spinning nozzle or the collector in order to generate the electric field. A voltage may also be applied to external electrodes not situated on the nozzle or the collector in order to generate a field. The voltage applied may range from about 1 to 300 kV and the polymer solution may be compressively discharged through the spinning nozzle under a discharge pressure in the range of about 0.01 to 200 kg/cm².

The compressed air has a flow rate of about 10 to 10,000 m/min and a temperature of from about room temperature to 300°C.

Polyimide nanowebs suitable for use in this invention may be prepared by imidization of a polyamic acid nanoweb where the polyamic acid is a condensation polymer prepared by reaction of one or more aromatic dianhydride and one or more aromatic diamine. Suitable aromatic dianhydrides include but are not limited to pyromellitic dianhydride (PMDA), biphenyltetracarboxylic dianhydride (BPDA), and mixtures thereof. Suitable diamines include but are not limited to oxydianiline (ODA), 1,3-bis(4-aminophenoxy)benzene (RODA), and mixtures thereof. Preferred dianhydrides include pyromellitic dianhydride, biphenyltetracarboxylic dianhydride, and mixtures thereof. Preferred diamines include oxydianiline, 1,3-bis(4-aminophenoxy)benzene and mixtures thereof. Most preferred are PMDA.and ODA.

In the polyamic acid nanoweb imidization process hereof, the polyamic acid is first prepared in solution; typical solvents are dimethylacetamide (DMAc) or dimethyformamide (DMF). In one method suitable for the practice of the invention, the solution of polyamic acid is formed into a nanoweb by electroblowing, as described in detail by Kim et al. in World Patent Publication No. WO 03/080905.

Imidization of the polyamic acid nanoweb so formed may conveniently be performed by any process known to one skilled in the art, such as by the process disclosed in U.S. Pat. Appln. Nos. 12/899,770 or in 12/899,801 (both filed Oct. 7, 2010), the disclosures of which are incorporated by reference herein in their entireties. For example, in one process imidization may be achieved by first subjecting the nanoweb to solvent extraction at a temperature of approximately 100 °C in a vacuum oven with a nitrogen purge. Following extraction, the nanoweb is then heated to a temperature of 300 to 350 °C for about 10 minutes or less, preferably 5 minutes or less, to fully imidize the nanoweb. Imidization according to the process hereof preferably results in at least 90 %, preferably 100%, imidization.

The polyamic acid or polyimide nanoweb may optionally be calendered. "Calendering" is the process of passing a web through a nip between two rolls. The rolls may be in contact with each other, or there may be a fixed or variable gap between the roll surfaces. Advantageously, in the present calendering process, the nip is formed between a soft roll and a hard roll. The "soft roll" is a roll that deforms under the pressure applied to keep two rolls in a calender together. The "hard roll" is a roll with a surface in which no deformation that has a significant effect on the process or product occurs under the pressure of the process. An "unpatterned" roll is one which has a smooth surface within the capability of the process used to manufacture them. There are no points or patterns to deliberately produce a pattern on the web as it passed through the nip, unlike a point bonding roll. The calendaring process may also use two hard rolls.

The nanoweb can have mean flow pore size from 0.1 to 5.0 microns, preferably less than 3 µm, and more preferably less than 1.5 µm. The pore size distribution can be normal (Gaussian), symmetric and asymmetric about the mean, and any other than normal distribution. "Mean flow pore size" refers here to mean flow pore size as measured according to ASTM Designation E 1294-89, "Standard Test Method for Pore Size Characteristics of Membrane Filters Using Automated Liquid Porosimeter." Capillary Flow Porometer CFP-2100AE (Porous Materials Inc. Ithaca, NY) was used. Individual samples of 25 mm diameter) are wetted with a low surface tension fluid (1,1,2,3,3,3-hexafluoropropene, or "Galwick," having a surface tension of 16 dyne/cm) and placed in a holder, and a differential pressure of air is applied and the fluid removed from the sample. The differential pressure at which wet flow is equal to one-half the dry flow (flow without wetting solvent) is used to calculate the mean flow pore size using supplied software.

The thickness of the uncoated nanoweb can be less than 100 microns, more preferably less than 50 microns, and even more preferably less than 25 microns, and even more preferably less than 15 microns. The porosity of the nanoweb, defined as percentage of the volume of the nanoweb not occupied by fibers, ranges between 10% and 90%, preferable between 30% and 75%, and more preferably between 40% and 65%. The air permeability of the nanoweb can range between 0.05 and 1000 (s/100cm³) Gurley, preferably between 0.05 and 500 (s/100cm³), even more preferably between 0.07 and 100 (s/100cm³), even more preferably between 0.1 and 50 (s/100cm³), and even more preferably between 1 and 10 (s/100cm³). The ionic resistivity of the nanoweb at ambient conditions can range from 100 (ohm*cm) to 2000 (ohm*cm), more preferably between 200-1000 (ohm*cm), and even more preferably between 600 and 900 (ohm*cm).

The separator of the invention comprises a first set of thermoplastic particles coated on the surface of a nanoweb and optionally bonded to or in contact with other particles. Coating indicates here that a porous layer composed of particles is formed on the surface of the nonwoven web.

In one embodiment, the coating useful in the invention comprises a collection of particles on one or both outside surfaces of the web, the particles forming a porous layer on said surfaces. A porous layer is referred to herein as a "coating." An individual coating may contain continuous or discontinuous regions of particles either separately or in contact with each other. The term "particle" refers to the smallest identifiable subdivision of the material or materials from which the coating is made. Each particle is defined by a continuous surface and surfaces of different particles may touch, or be bonded to neighboring particles or to the nanoweb. One skilled in the art will understand that not all of the surface of the nanoweb needs to be coated as long as at least a portion of the nanoweb is coated with particles, and upon reaching a threshold temperature, shutdown function can be achieved with the coating of particles. For example, the coating can be in the form of a pattern from which the particles are capable of flowing together.

The coating of the invention may or may not comprise a surfactant.

The term "particle" has its smallest identifiable subdivision characterized by a number average maximal external diameter that is larger than the mean flow pore size of the nanoweb.. "Maximal external diameter" is synonymous to "size" herein and refers to the largest dimension of the discrete entity.

The total thickness of the coated nanoweb can be less than 100 microns, more preferably less than 50 microns, even more preferably less than 25 microns, and even more preferably less than 15 microns. In a further embodiment, the separator further comprises a first set of thermoplastic particles wherein the nonwoven web can be characterized as having a mean flow pore size, and the number average particle size is at least equal to one times the mean flow pore size. Preferably the majority of the particles have a size greater than the mean flow pore size of the nanoweb. In a further embodiment of the invention, greater than 60%, or even greater than 80% or 90%, or even 100% of the particles have a size greater than the mean flow pore size of the nanoweb.

In some embodiments, the number average particle size may be at least 2 times the mean flow pore size or at least 3 times or even at least 5 times the mean flow pore size. In other embodiments, the number average particle size may be at least 10 times the mean flow pore size, or even at least 20 times the mean flow pore size.

Particles may be aggregated on the surface of the web, even to the extent that the discrete nature of the particles is not evident in micrographs of the porous layer, but in any event the individual discrete particles that form aggregates are limited to the possible sizes described above.

The particles used in the first set of particles of the present invention are thermoplastic. "Thermoplastic" may be defined as exhibiting a "melting point", defined in a phase diagram as the temperature at which the liquidus and solidus coincide at an invariant point at a given pressure per ASTM E1142 incorporated as a reference in ASTM D3418. Thermoplastic may also include any material that exhibits flow behavior at a temperature where particles lose their structural integrity.

In some embodiments, the thermoplastic is a polymer (such as those described below), oligomer, wax, or blends thereof. The polymer may be a homopolymer or copolymer or any combination of any number of monomers that yield a thermoplastic polymer. Examples of suitable polymers are polyolefins, such as a polyethylene, polypropylene or polybutene or mixtures thereof. The polymer chains can be functionalized to modify their properties. Functionalization may for example include oxidation to modify the surface energy of the particles to improve their dispersability, grafting of oligomer to, for example, modify the melt rheology of the polymer, or any other functionalization known in the art. The particles can in turn be functionalized prior to being dispersed to modify their properties, such as by coating, oxidation, grafting, chemical vapor deposition, surface plasma treatment, ozone treatment, and other functionalization methods known in the art. The particles can also be bicomponent polymeric particles having side-by-side or core-shell structures or be composite particles composed of a polymeric phase reinforced with inorganic particles.

The particles can be non-polar or polar. The polarity can be determined, for example, by the acid number. The acid number (or "neutralization number" or "acid value" or "acidity") is a measure of the amount of carboxylic acid groups in a chemical compound, or in a mixture of compounds. It is defined as the mass of potassium hydroxide (KOH) in milligrams (mg) that is required to neutralize one gram (g) of chemical substance. In a typical procedure, a known amount of sample dissolved in organic solvent is titrated with a solution of potassium hydroxide with known concentration and with phenolphthalein as a color indicator. The acid number can be determined following standard method ASTM D974. The particles can have an acid number of 200 mgKOH/g, preferably less than 100 mgKOH/g, more preferably less than 50 mgKOH/g, and even more preferably less than 10 mgKOH/g.

In another embodiment, the coating may comprise a first set of thermoplastic particles as described above and a second set of polymeric or non-polymeric particles, applied separately or blended together, in which the first and second sets are made of different materials, or of the same material but with other differences as described hereafter. The first and second sets may have different shapes and sizes, or have different functionalities. The first and second sets, for example, may also have different thermal properties, such as different melting points, and different melt viscosities. The non-polymeric particles used in the second set of particles may be, for example, ceramic particles. Polymeric particles useful in the second set are preferably selected from the same group of thermoplastic particles described above for the first set of particles. More than two sets of particles can also optionally be used and applied separately, or blended together with the one or more sets of particles. The particles can be produced by micronization, by grinding, by milling, by prilling, by electrospraying, or by any other process known in the art. The particles can be colloidal particles.

In some embodiments, the particles, such as the first and/or second and/or subsequent sets of particles may be colloidal particles that have been flocculated into a coherent material before being applied to the nanoweb layer. Particles may be flocculated from a colloidal suspension by, for example, addition of organic solvents to the suspension or increasing the ionic strength (e.g. by adding salts) of the suspension in which the colloid is suspended or by varying the pH of the suspension. "Flocculated" means that the smaller particles maintain their individual identity but are held together as a porous material with each particle having a set of nearest neighbor particles in contact with it. Such flocculation techniques are disclosed in patent application entitled, "Lithium Battery Separator with Shutdown Function", being filed herewith on the same day, and which claims the benefit of US application number 61/568,680, the entire disclosures of both are hereby incorporated by reference.

The particles may be spherical but need not be spherical. The particles can have a high aspect ratio, a low aspect ratio or the particles can be a mixture of both types of particles or even irregularly shaped particles. The term "aspect ratio" of a particle is defined herein as a ratio of a largest dimension of the particle divided by a smallest dimension of the particle. The aspect ratios can be determined by scanning under an electron microscope and visually viewing the outside surfaces of the particles to determine the lengths and thicknesses of the particles. The use of single digits and the use of two digits to describe aspect ratio herein are synonymous. For example the terms "5:1" and "5" both have the same meaning. A low aspect ratio particle is defined as being a particle having an aspect ratio of from 1:1 to about 3:1 and such particles can also be used in the structure of the invention.

All of the particles may further have an aspect ratio of 1, or between 1 and 120, or even between 3 and 40. The number average aspect ratio of the particles may further have an aspect ratio of between 1 and 120, or even between 3 and 40. In a further embodiment, at least 10% and preferably at least 30% and even at least 50% or 70% of the particles have an aspect ratio of between 1 and 120, or even between 3 and 40. Blends of particles may also be used in which one plurality of particles have a high aspect ratio and another plurality of particles have a low aspect ratio.

All or any of either the first or second set particles as defined above may further have an aspect ratio of between 3 and 120, or 5 and 120, or 10 and 120, or even between 3 and 40, or 5 and 40, or 10 and 40. The number average aspect ratio of the first or second set or both sets of particles may further have an aspect ratio of between 3 and 120, or 5 and 120, or 10 and 120, or even between 3 and 40, or 5 and 40, or 10 and 40. In a further embodiment, at least 10% and preferably at least 30% and even at least 50% or 70% of the particles have an aspect ratio of between 3 and 120, or 5 and 120, or 10 and 120, or even between 3 and 40, or 5 and 40, or 10 and 40.

Alternatively, the particles can be fibrids, which typically have a length and width on the order of 5 to 1000 µm and a thickness on the order of 0.05 to 1 µm.

There is therefore no particular limitation to the upper or lower limit of the number average aspect ratio of either set of particles. The particles can also be irregularly shaped, for example as would be the case if the particles were prepared by micronization or grinding.

The melting point of the particles may be characterized by differential scanning calorimetry, for example, using standard tests ASTM D3418 or ISO 11357, both of which are hereby incorporated by reference in their entirety. A thermoplastic polymer may have a range of melting characterized by an onset melting temperature and a peak melting temperature, also measured according to ASTM D3418. "Melting point onset" is synonymous to "melting extrapolated onset temperature" defined in ASTM D3418 as the value of the independent parameter (temperature) found by extrapolating the dependent parameter (enthalpy) from the heating differential scanning calorimetry (DSC) curve baseline prior to the event of melting and a tangent constructed at the inflection point on the leading edge to their intersection.

The thermoplastic particles are preferably made from a material which melts below the melting point of the nanoweb. The thermoplastic particles are preferably characterized by having a melting point onset of between 70°C and 180°C. The thermoplastic particles may have a melting point onset of between 80°C and 180°C, 90°C and 150°C, or even between 110°C and 140 °C. These ranges will ensure that the cell will be shut down while at a safe temperature.

The separator of the invention may further comprise a second set of particles, the second set of particles having a mean particle size of at least equal to one times the mean flow pore size and having a melting point onset of between 70° C and 160°C, or even between 80°C and 130C. The second set of particles may also have an average size that is at least 2 times the mean flow pore size of the nonwoven web, or a an average size that is at least 5 times the mean flow pore size of the nonwoven web, or a an average size that is at least 10 times the mean flow pore size of the nonwoven web.

The particles of the invention may also comprise a blend of a first set of particles with the onset of melting point specified above, and a second set of particles with a different onset of melting point from the first set of particles, or even the same onset of melting point. In certain embodiments, the weight percentage of the first set of particles by weight of total particles can be at least 1 %, or 40%, or 60% or even at least 80% or 99%.

The particles of the invention may also be a blend of polymeric and non-polymeric particles, such as for example, a first set of thermoplastic particles with a second set of non-polymeric particles, such as ceramic particles.

The particles may be applied to the web by any means known to one skilled in the art. For example, particle suspensions may be applied by standard coating processes such as gravure coating, slot die coating, draw-down coating, roller coating, dip coating, curtain coating methods or any printing methods. The coating process may include a drying step to remove the continuous phase. Particles may also be applied without any liquid media, in a 100% solid phase.

Particles may be applied in multiple layers, with one type per layer, or a different blend of particle types in each layer.

The coating is stabilized onto the nonwoven web. Stabilization indicates that sufficient permanent interaction is created between particles and between particles and the nonwoven web, so that the coated nonwoven web can withstand the remaining process steps and fabrication of the electrochemical cells. The stabilization is typically done during the drying step of the coating process. During drying, sufficient heat is applied to the coating to remove the continuous phase, and to soften or partially melt the outer surface of the particles, resulting in the particles fusing together and to the nonwoven web.

Alternatively, one set of particles of the coating blend can act as a binder phase. The binder phase can be composed of polymer particles that have a lower melting temperature compare to the particles that provide shutdown functionality. During drying, the binder particles melt and flow, and, upon cooling, solidify and create a link between the intact particles and between those particles and the nonwoven web. Alternatively, the binder phase can be an oligomer or a polymer, such as a polyethylene oxide, dissolved in the continuous phase. Alternatively, the particles can be stabilized onto the nonwoven web by spraying an adhesive onto the coating. Alternatively, the particles can be stabilized by applying an adhesive film onto the nonwoven web and then coating with the particles dispersion or by applying an adhesive film onto the coating. In this case, the adhesive film will melt and fuse the particles together and fuse the particles to the nonwoven web during the stabilization step.

Alternatively, the stabilization can be done by thermal calendaring, in line with the coating process or as a separate processing step.

The coated nonwoven web of the invention offers a shutdown functionality. The shutdown functionality indicates that the coated separator provides a means to significantly increase the ionic resistance (i.e. reduce the ionic conductivity) of the separator at a specific temperature threshold. Below the threshold temperature, the coated separator allows for the flow of ions from one electrode to the other. The specific temperature threshold is defined as the minimum temperature of a range within which the ionic resistance has increased over its initial value to some desired or specified value.

Zero shear viscosity refers to the viscosity at the limit of low shear rate. Zero shear viscosity can be measured by any method known to one skilled in the art, for example capillary rheometry, ASTM D3835 (ISO 11443) both hereby incorporated by reference in their entirety. The thermoplastic particles useful in the invention (including the first and second set of particles) may have a zero shear viscosity at 140°C of less than 1,000,000 (centipoise) cP or less than 100,000 cP, or less than 10,000 cP. In other embodiments, the thermoplastic particles useful in the invention may have a zero shear viscosity at 140°C above 50 cP, or above 100 cP, or above 500 cP or between 50 cP and 100,000 cP. In yet other embodiments, the thermoplastic particles useful in the invention may have a zero shear viscosity at 190°C between 50 cP and 15,000,000 cP, or between 50 cP to 1,000,000 cP, or between 50 cP to 100,000 cP. This property has an effect on the time it takes for the particles after they reach their melting point to flow and close the pores of the nanoweb.

The separator offers a shutdown functionality and is preferably structurally and dimensionally stable, as defined by a shrinkage of less than 10%, 5%, 2% or even 1%, at all temperatures up to 200°C to prevent electrical short circuiting due to the degradation or shrinkage of the separator.

In another aspect of the invention, a process is provided for manufacturing a separator. The process includes coating a first set of thermoplastic particles onto a surface of a nanofiber nonwoven web, where the particles cover at least a portion of the surface of the web, where the nonwoven web has a mean flow pore size of between 0.1 microns and 5 microns, and the number average particle size is at least equal to the mean flow pore size. In some embodiments, the first set of thermoplastic particles are flocculated and applied as a floc of thermoplastic particles to the nonwoven web. The nanofiber nonwoven web may also be coated with one or more other sets of particles according to the techniques described herein.

In another aspect, the invention provides an electrochemical cell, especially a lithium or lithium-ion battery, comprising a housing having disposed therewithin, an electrolyte, and a multi-layer article at least partially immersed in the electrolyte; the multi-layer article comprising a first metallic current collector, a first electrode material in electrically conductive contact with the first metallic current collector, a second electrode material in ionically conductive contact with the first electrode material, a porous separator disposed between and contacting the first electrode material and the second electrode material; and, a second metallic current collector in electrically conductive contact with the second electrode material, wherein the porous separator comprises a nanoweb that includes a plurality of nanofibers. In some embodiments, the nanofibers comprise and preferably consist essentially of, or in the alternative consist only of, a fully aromatic polyimide. Ionically conductive components and materials transport ions, and electrically conductive components and materials transport electrons.

In one embodiment of the electrochemical cell hereof, the first and second electrode materials are different, and the electrochemical cell hereof is a battery, preferably a lithium ion battery. In an alternative embodiment of the electrochemical cell hereof, the first and second electrode materials are the same and the electrochemical cell hereof is a capacitor, preferably an electronic double layer capacitor. When it is stated herein that the electrode materials are the same, it is meant that they comprise the same chemical composition. However, they may differ in some structural component such as particle size.

In a further embodiment of the multi-layer article of the invention, at least one electrode material is coated onto a non-porous metallic sheet that serves as a current collector. In a preferred embodiment, both electrode materials are so coated. In the battery embodiments of the electrochemical cell hereof, the metallic current collectors comprise different metals. In the capacitor embodiments of the electrochemical cell hereof, the metallic current collectors comprise the same metal. The metallic current collectors suitable for use in the present invention are preferably metal foils.

The following examples illustrate the invention without, however, being limited thereto.

### EXAMPLES

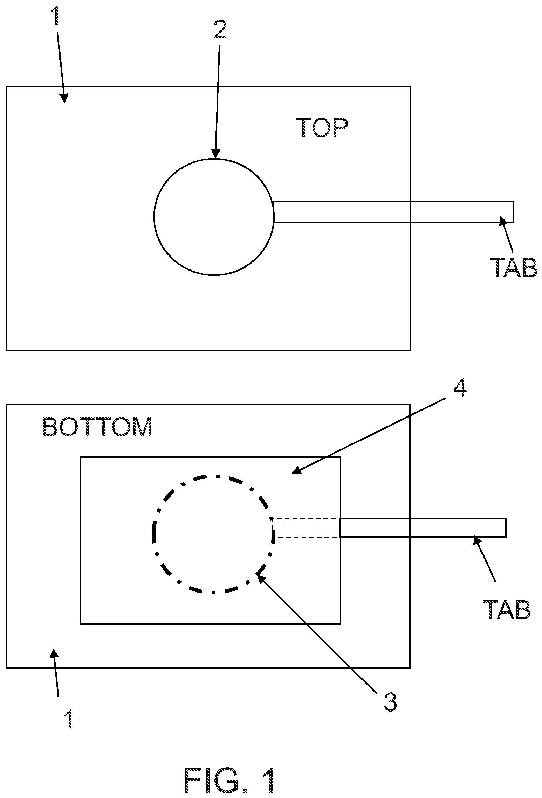

An electroblowing process and apparatus for forming a nanofiber web of the invention as disclosed in PCT publication number WO 2003/080905, as illustrated in FIG. 1 of WO 2003/080905, was used to produce the nanofiber layers and webs of the Examples below. Polyamic acid webs were prepared from a solution of PMDA/ODA in dimethyl formamide (DMF) and electroblown as described herein. The nanofiber layers and webs were then heat treated according to the procedure described in copending US Patent Application No. 12/899,770, previously incorporated by reference herein in its entirety for reference. Finally, the webs were calendered through a steel/cotton nip at 140 pounds per linear inch and 160°C.

Table 1 summarizes the properties of the resulting nanowebs (without the particle coating) used to prepare the examples below. All nanowebs were composed of fully imidized polyimide fibers having an average fiber size between 600-800 nm.

**Table 1. Average properties of the nanoweb without particle coating.**

| **Example** | **Basis weight, g/m²** | **Thickness, µm** | **Porosity, %** | **Mean Flow Pore size (mfp), µm** | **Air permeability, Gurley s/100cc** |
|---|---|---|---|---|---|
| **1** | 14.2 | 17 | 42 | 0.9 | 3±1 |
| **2** | 15.5 | 19 | 43 | 0.7 | 4±1 |
| **3** | 15.5 | 19 | 43 | 0.7 | 4±1 |
| **4** | 14.8 | 24 | 57 | 0.7 | 6±1 |
| **5** | 15.4 | 18 | 40 | 0.9 | 4±1 |
| **6** | 15.4 | 18 | 40 | 0.9 | 4±1 |
| **7** | 15.4 | 18 | 40 | 0.9 | 4±1 |

### TEST METHODS

Mean flow pore size was measured according to ASTM Designation E 1294-89, "Standard Test Method for Pore Size Characteristics of Membrane Filters Using Automated Liquid Porosimeter" incorporated herein by reference in its entirety. A capillary Flow Porometer CFP-2100AE (Porous Materials Inc. Ithaca, NY) was used. Individual samples of 25 mm diameter were wetted with a low surface tension fluid (1,1,2,3,3,3-hexafluoropropene, or "Galwick," having a surface tension of 16 dyne/cm) and placed in a holder, and a differential pressure of air was applied and the fluid removed from the sample. The differential pressure at which wet flow is equal to one-half the dry flow (flow without wetting solvent) was used to calculate the mean flow pore size using supplied software.

Thickness was determined using a handheld micrometer (Mitutoyo APB-2D, Mitutoyo America Corporation, Aurora, IL) having 6 mm diameter spindles and applies a pressure of 75 kPa. Thickness is reported in micrometers (µm).

Basis Weight was determined according to ASTM D-3776 and reported in g/m².

Porosity was calculated by dividing the basis weight of the sample in g/m2 by the polymer density in g/cm³ and by the sample thickness in micrometers and multiplying by 100 and subsequently subtracting from 100%, i.e., percent porosity = 100 - basis weight/(density x thickness) x 100.

The air permeability was measured according to ASTM Designation D726-94, "Standard Test Method for Resistance of Nonporous Paper to Passage of Air" incorporated herein by reference in its entirety. Individual samples were placed in the holder of Automatic Densometer model 4340 (Gurley Precision Instruments, Troy, NY) and an air at a pressure of 0.304 (kPa) is forced through an area of 0.1 inch² or 0.645 cm² of the sample, recalculated by software to 1 inch² or 6.45 cm². The time in seconds required for 100 (cm³) of air to pass through the sample was recorded as the Gurley air permeability with the units of (s/100cm³ or s/100cc).

Ionic Resistance is a measure of a separator's resistance to the flow of ions, and is measured using an AC impedance technique. Samples were cut into small pieces (31.75 cm diameter) and soaked in 1 M LiPF₆ in 30:70 Ethylene Carbonate / Ethyl Methyl Carbonate (EC/EMC) electrolyte. The separator resistance was measured using Solartron 1287 Electrochemical Interface along with Solartron 1252 Frequency Response Analyzer and Scribner Associates Zplot (version 3.1 c) software. The test cell had a 5.067 square cm electrode area that contacted the wetted separator. Measurements were done at AC amplitude of 5 mV and the frequency range of 10 Hz to 100,000 Hz. The high frequency intercept in the Nyquist plot is the separator resistance (in ohm). The separator resistance (ohm) was multiplied with the electrode area (5.067 square cm) to determine ionic resistance in ohm-cm².

The shutdown test measures the increase in resistance as a function of temperature to determine the shutdown capability of battery separators. Figure 1 illustrates a measurement cell useful for characterizing the shutdown properties of battery separators versus temperature.

Figure 1 illustrates separately the bottom part of the cell and the top part. The cell consists of two Stainless Steel (Type 304) disks which serve as electrodes. The bottom disk (3) is 25 mm, and the top disk (2) is 22 mm diameter, both of which are 1/8" thick and embedded in Silicon rubber and Kapton polyimide film sandwich (1). Both stainless steel disks are fitted with stainless steel tabs as shown in Figure 1.

The separator (4) in the examples was saturated with organic electrolyte consisting of 1M lithium Bis(trifluoromethanane)sulfonimide (Aldrich) in propylene carbonate (Aldrich).

The disks (2,3) and rubber were used to sandwich the electrolyte-saturated separator (4) by placing the separator between the disks and pressing them in a Carver press with heated platens. The platens were heated at a constant rate from room temperature to 200°C using a Eurotherm model 2408 controller. The temperature of the electrode surface was measured by one E type thermocouple embedded in the bottom part of the cell with the thermocouple positioned adjacent to the bottom disk holding the separator. The tabs of the electrodes were connected with an Agilent 4338B milliohmmeter and the ionic resistance measurements were taken at 1 KHz as the temperature of the cell was ramped up. The test was stopped at ∼200°C and the cell was cleaned after the temperature was allowed to drop to room temperature.

Shrinkage is a measure of the dimensional stability. The length of a sample in the machine-direction (MD) and cross-direction (CD) was measured. The sample was placed unrestrained on top of a horizontal support in a conventional laboratory convection oven for 10 minutes at an elevated temperature. The samples was then removed from the oven and allowed to cool down. The MD and CD lengths were then measured again. Shrinkage was calculated by dividing the surface area (MD length multiplied by the CD length) after heat exposure to the surface area before exposure to heat, subtracting this ratio to one, and multiplying by 100.

### Example 1

A commercially available dispersion of oxidized polyethylene particles in a aqueous phase (Liquitron 424, Lubrizol Advanced Materials, McCook, IL) was coated onto the nanoweb using a slot die coating process. The mean particle size was 5 µm, and the peak melting temperature was 114°C, and melt onset temperature 70°C. The viscosity of the dispersion was adjusted by adding deionized water to improve the coating process. The final solids content is the dispersion was 14%. The coating speed was 5 ft/min, with the dispersion pumped at 11.5 ml/min through a 5 mil gap in the slot that was 4.4" wide. The dryer temperature was ramped along the 20 feet length from 37°C to 63°C. An additional heat treatment was done in a convection oven at 85°C. The final sample thickness was 63 µm with a coating thickness of ∼46 µm, and the air permeability was 5±1 (s/100 cm³). The resistance was initially low and stable as a function of temperature. The resistance started to increase when the temperature reached ∼70°C and drastically increased when the temperature reaches ∼80°C. The resistance peaked at 96°C. At the peak, the resistance had increased by -14 times the resistance at 70°C.

### Example 2

A commercially available powder of oxidized polyethylene particles (Pinnacle 1625, Lubrizol Advanced Materials, McCook, IL), having a mean particle size of 7µm, a melt onset temperature of 118°C and a peak melting temperature of 126°C, was added to a commercially available dispersion of oxidized polyethylene particles, having a mean particle size of 12µm, a melt onset temperature of 128°C and a peak melting temperature of 136°C, in a aqueous phase (Liquitron 440, Lubrizol Advanced Materials, McCook, IL). The solids concentration of the new dispersion was 29%, and the concentration of each type of particles in the dispersion was 50% by weight. The sample was prepared by a manual draw-down method using a wire-wound metering rod (aka Meyer rod) number 18. A handsheet of nanoweb material was attached to a flat glass support. A small amount of dispersion was applied to the nanoweb substrate. The dispersion was then drawn along the surface of the nanoweb using the wire-wound rod, with a specific amount being left behind due to the gaps between the wires. The gaps in the rod are directly dependent on the diameter of the wires. The sample was then dried in a convection oven at 115°C for 1 minute. The coating process resulted in a sample having a total thickness of 35 µm, with a coating layer having a thickness of 16 µm, and a coated nanoweb having an air permeability of 5.5±1 (s/100 cm³). The resistance was initially low and stable as a function of temperature. The resistance started to increase when the temperature reached ∼105°C and drastically increased when the temperature reaches ∼112°C. The resistance peaked at 126°C. At the peak, the resistance had increased by -at least 7 times the resistance at 70°C.

### Example 3

A commercially available powder of oxidized polyethylene particles (Pinnacle 1625, Lubrizol Advanced Materials, McCook, IL), having a mean particle size of 7µm, a melt onset temperature of 118°C and a peak melting temperature of 126°C, and another commercially available powder of oxidized polyethylene (Pinnacle 1610, Lubrizol Advanced Materials, McCook, IL), having a mean particle size of 12µm, a melt onset temperature of 127°C, and a peak melting temperature of 136°C, were dispersed in a liquid phase composed of 100% isopropyl alcohol (EMD Chemicals, Gibbstown, NJ) without the use of a dispersant or surfactant. The solids concentration of the dispersion was 29%, and the concentration of each type of particles in the dispersion was 50% by weight. The sample was prepared by a manual draw-down method using a wire-wound metering rod (aka Meyer rod) number 18. A handsheet of nanoweb material was attached to a flat glass support. A small amount of dispersion was applied to the nanoweb substrate. The dispersion was then drawn along the surface of the nanoweb using the wire-wound rod, with a specific amount being left behind due to the gaps between the wires. The gaps in the rod are directly dependent on the diameter of the wires. The sample was then dried in a convection oven at 115°C for 1 minute. The coating process resulted in a sample having a total thickness of 43 µm, with a coating layer having a thickness of 24 µm, and a coated nanoweb having an air permeability of 5.7±1 (s/100 cm³). The resistance was initially low and stable as a function of temperature. The resistance started to increase when the temperature reached ∼110°C and drastically increased when the temperature reached ∼120°C. The resistance peaked at 126°C. At the peak, the resistance had increased by -at least 7 times the resistance at 70°C.

### Example 4

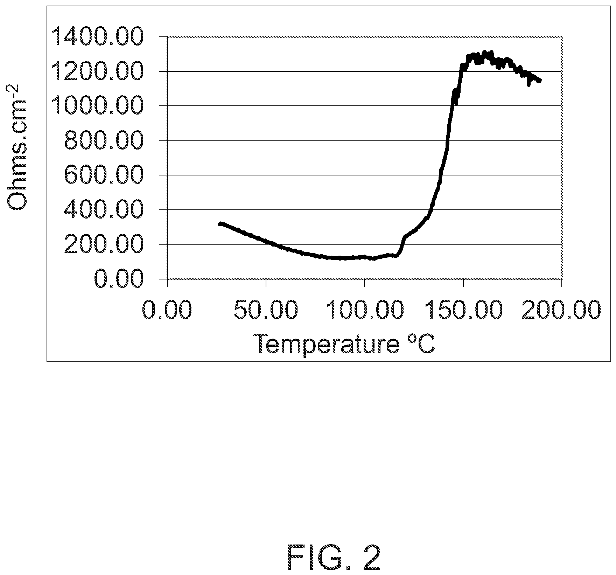

A commercially available powder of oxidized polyethylene particles (Pinnacle 1625, Lubrizol Advanced Materials, McCook, IL), having an mean particle size of 7µm, a melt onset temperature of 118°C, and a peak melting temperature of 126°C, and another commercially available powder of polypropylene (Pinnacle 1996, Lubrizol Advanced Materials, McCook, IL), having a mean particle size of 9 µm, a melt onset temperature of 128°C, and a peak melting temperature of 140°C, were dispersed in a liquid phase composed of 100% isopropyl alcohol (EMD Chemicals, Gibbstown, NJ) without the use of a dispersant or surfactant. The solids concentration of the dispersion was 25%, and the concentration of each type of particles in the dispersion was 50% by weight. The sample was prepared by coating the nanoweb using a microgravure coating process. The peak drying temperature was 122°C. The coating process resulted in a sample having a total thickness of 28 µm, with a coating layer having a thickness of 4 µm, and a coated nanoweb having an air permeability of 6.8±1 (s/100 cm³). Figure 2 shows the results from the shutdown test. The resistance was initially low. The resistance started to increase when the temperature reached ∼118°C and drastically increased when the temperature reached ∼132°C. The resistance peaked at 161°C. At the peak, the resistance had increased by ∼9 times the resistance at 70°C.

Shrinkage of the separator was determined to be less than 1% at temperatures of 120°C, 130°C, 147°C, 175°C and 200°C by measuring the surface area of the sample before and after subjecting it to the respective specified temperatures for 10 minutes.

### Examples 5-7

A commercial dispersion of oxidized polyethylene particles in an aqueous phase, having an mean particle size of 5 µm, a melt onset temperature of 70°C and a peak melting temperature of 115°C (Liquitron 420, Lubrizol Advanced Materials, McCook, IL), was added to a commercially available dispersion of oxidized polyethylene particles, having a mean particle size of 12µm, a melt onset temperature of 128°C, and a peak melting temperature of 136°C, in a aqueous phase (Liquitron 440, Lubrizol Advanced Materials, McCook, IL). The new dispersion was diluted with deionized water, such that the solids concentration of the new dispersion was 29%, and the concentration of each type of particles in the dispersion was 50% by weight. The sample was prepared by coating the nanoweb using a microgravure coating process. The peak drying temperature was 100°C. The final coating thickness was -16 µm, the air permeability of the coated nanoweb was 5.0±1 (s/100 cm³), and the ionic resistance was 4.5 ohm*cm².

### Example 5

In this example the coated sample described above was tested as-is. The data are summarized on Tables 2 and 3. As for previous examples, the resistance was initially low and stable as a function of temperature. The resistance started to increase when the temperature reached ∼80°C and drastically increased when the temperature reached ∼120°C. The resistance peaks at 124°C. At the peak, the resistance had increased by -10 times the resistance at 70°C.

### Example 6

An uncoated nanoweb was layered with the coated nanoweb described above. The electrical resistance of the composite sample was 6.2 ohm/*cm². The data are summarized in Tables 2 and 3. As for the previous example, the resistance was initially low and stable as a function of temperature. The resistance started to increase when the temperature reached ∼80°C and drastically increased when the temperature reached ∼120°C. The resistance peaked at 124°C. At the peak, the resistance had increased by ∼5 times the resistance at 70°C.

### Example 7

Two pieces of coated nanowebs, as described above, were layered such that the both coated surfaces were in contact. The ionic resistance of the composite sample was 9.0 ohm*cm². The data are summarized in Tables 2 and 3. The resistance was initially low and stable as a function of temperature. The resistance started to increase when the temperature reached ∼80°C and drastically increased when the temperature reached ∼120°C. The resistance peaked at 124°C. At the peak, the resistance had increased by -16 times the resistance at 70°C.

**Table 2. Average properties of the nanowebs with the particle coatings**

| **Example** | **Basis weight, g/m²** | **Particle loading, wt% of total sample weight** | **Thickness, µm** | **Air permeability, Gurley s/100cc** |
|---|---|---|---|---|
| **1** | 35.3 | 59.8 | 63 | 5±1 |
| **2** | 24 | 35.4 | 35 | 5±1 |
| **3** | 24 | 35.4 | 43 | 6±1 |
| **4** | 19.8 | 25.3 | 28 | 7±1 |
| **5** | 24.5 | 37.1 | 34 | 5±1 |
| **6** | 40 | 22.8 | 37.9 | 9±1 |
| **7** | 49 | 37.1 | 68 | 10±1 |

The shutdown test results for Example 1 through 7 are summarized in Table 3. The table lists the resistance (in ohm*cm²) at the beginning of the test (25°C), at 70°C and the peak resistance at shutdown. The ratio of the maximum resistance to the initial resistance is also listed for temperature of 25°C and 70°C. All these examples demonstrate a shutdown behavior, where the resistance increased by more than 50% after the specific temperature threshold was reached.

**Table 3. Data from the shutdown test**

| **Example** | **Resistance, ohm*cm², at different temperatures** | | | **Resistance ratio** | |
|---|---|---|---|---|---|
| | **25°C** | **70°C** | **Max shutdown (at temperature, °C)** | **Max/@25°C** | **Max/@70°C** |
| **1** | 657 | 1972 | 26855 (96°C) | 40.8 | 13.6 |
| **2** | 588 | 357 | 2527 (126°C) | 4.3 | 7.1 |
| **3** | 597 | 209 | 1604 (126°C) | 2.7 | 7.7 |
| **4** | 315 | 146 | 1313 (161°C) | 4.2 | 9.0 |
| **5** | 466 | 364 | 3849 (124°C) | 8.3 | 10.6 |
| **6** | 809 | 427 | 2158 (124°C) | 2.7 | 5.1 |
| **7** | 927 | 452 | 7448 (124°C) | 8.0 | 16.5 |

## Claims

1. A separator for an electrochemical cell comprising nanofibers arranged into a nonwoven web, and further comprising a first set of thermoplastic particles coated onto the surface of the nonwoven web in form of a coating that covers at least a portion of the surface of the web, wherein the nonwoven web has a porosity of between 10% and 90% and a mean flow pore size of between 0.1 microns and 5 microns, and wherein the thermoplastic particles have a number average particle size which is at least equal to the mean flow pore size.

2. The separator is claim 1 in which the number average particle size is at least 5 times the mean flow pore size.

3. The separator of claim 1 or 2 in which the thermoplastic particles have a melting point onset of between 70°C and 180°C.

4. The separator of any of the claims 1 to 3 in which the coating further comprises a second set of particles different from the first set of particles and selected from the group consisting of polymer particles, non-polymeric particles, and blends thereof.

5. The separator of claim 4 in which the second set of particles has a mean particle size of at least equal to the mean flow pore size and have a melting point onset between 70°C and 160°C.

6. The separator of claim 4 or 5 in which the second set of particles has a mean particle size of at least 5 times the mean flow pore size.

7. The separator of any one of the claims 4 to 6 in which the first set of particles and the second set of particles are blended within the coating.

8. The separator of any one of the claims 1 to 7 in which the particles are functionalized.

9. The separator of claim 1 in which the particles are coated, core-shell, bicomponent or composite particles, or in which the coating is stabilized using binder particles, a dissolved oligomer or polymer, or an adhesive spray or film.

10. The separator of any one of claims 4 to 9 in which the first and second set of particles are arranged in separate discrete layers in the coating.

11. The separator of any one of claims 1 to 10 further comprising a plurality of distinct and discrete nonwoven webs where the nonwoven webs are separated from each other by the thermoplastic particles.

12. The separator of any one of claims 1 to 11 in which the particles have an acid number of less than 200mgKOH/g, or in which the coating does not contain any surfactants or dispersants.

13. An electrochemical cell comprising a separator according to any one of claims 1 to 12.

14. A lithium ion battery comprising a separator according to any one of claims 1 to 12.

15. A process of manufacturing a separator according to claim 1 comprising applying a first set of thermoplastic particles onto a surface of the nonwoven web comprising nanofibers, wherein the particles cover at least a portion of the surface of the nonwoven web for forming a coating, wherein the nonwoven web has a porosity of between 10% and 90% and a mean flow pore size of between 0.1 microns and 5 microns, and wherein the number average particle size of the particles is equal to or greater than the mean flow pore size.

## Patentansprüche

1. Separator für eine elektrochemische Zelle, umfassend Nanofasern, die zu einer Vliesstoffbahn angeordnet sind, und ferner einen ersten Satz thermoplastischer Teilchen umfassend, die schichtförmig auf die Oberfläche der Vliesstoffbahn in Form einer Beschichtung aufgetragen sind, die mindestens einen Teil der Oberfläche der Bahn bedeckt, wobei die Vliesstoffbahn eine Porosität zwischen 10 % und 90 % und eine Mittelströmung-Porengröße zwischen 0,1 Mikron und 5 Mikron aufweist und wobei die thermoplastischen Teilchen eine zahlendurchschnittliche Teilchengröße aufweisen, die mindestens der Mittelströmung-Porengröße gleich ist.

2. Separator nach Anspruch 1, wobei die zahlendurchschnittliche Teilchengröße mindestens 5-mal größer ist als die Mittelströmung-Porengröße.

3. Separator nach Anspruch 1 oder 2, wobei die thermoplastischen Teilchen einen Schmelzpunkteintritt zwischen 70 °C und 180 °C aufweisen.

4. Separator nach einem der Ansprüche 1 bis 3, wobei die Beschichtung ferner einen zweiten Satz Teilchen umfasst, der von dem ersten Satz Teilchen verschieden ist, und die Teilchen aus der Gruppe ausgewählt sind bestehend aus Polymerteilchen, Nichtpolymerteilchen und Mischungen davon.

5. Separator nach Anspruch 4, wobei der zweite Satz Teilchen eine mittlere Teilchengröße aufweist, die mindestens der Mittelströmung-Porengröße gleich ist, und die Teilchen einen Schmelzpunkteintritt zwischen 70 °C und 160 °C aufweisen.

6. Separator nach Anspruch 4 oder 5, wobei der zweite Satz Teilchen eine mittlere Teilchengröße von mindestens dem 5-Fachen der Mittelströmung-Porengröße aufweist.

7. Separator nach einem der Ansprüche 4 bis 6, wobei der erste Satz Teilchen und der zweie Satz Teilchen innerhalb der Beschichtung gemischt sind.

8. Separator nach einem der Ansprüche 1 bis 7, wobei die Teilchen funktionalisiert sind.

9. Separator nach Anspruch 1, wobei die Teilchen beschichtete, Kern-Mantel-, Bikomponenten- oder Verbundstoffteilchen sind oder wobei die Beschichtung unter Anwendung von Bindemittelteilchen, einem gelösten Oligomer oder Polymer oder einem Klebstoffspray oder -film stabilisiert wird.

10. Separator nach einem der Ansprüche 4 bis 9, wobei der erste und der zweite Satz Teilchen in getrennten einzelnen Schichten in der Beschichtung angeordnet sind.

11. Separator nach einem der Ansprüche 1 bis 10, ferner eine Mehrzahl verschiedenartiger einzelner Vliesstoffbahnen umfassend, wobei die Vliesstoffbahnen voneinander durch die thermoplastischen Teilchen getrennt sind.

12. Separator nach einem der Ansprüche 1 bis 11, wobei die Teilchen eine Säurezahl von weniger als 200 mgKOH/g aufweisen oder wobei die Beschichtung keine Tenside oder Dispergierhilfsmittel enthält.

13. Elektrochemische Zelle, umfassend einen Separator nach einem der Ansprüche 1 bis 12.

14. Lithiumionenbatterie, umfassend einen Separator nach einem der Ansprüche 1 bis 12.

15. Verfahren für die Herstellung eines Separators nach Anspruch 1, umfassend das Auftragen eines ersten Satzes thermoplastischer Teilchen auf eine Oberfläche der Vliesstoffbahn, die Nanofasern umfasst, wobei die Teilchen mindestens einen Teil der Oberfläche der Vliesstoffbahn zum Bilden einer Beschichtung bedecken, wobei die Vliesstoffbahn eine Porosität zwischen 10 % und 90 % und eine Mittelströmung-Porengröße zwischen 0,1 Mikron und 5 Mikron aufweist und wobei die zahlendurchschnittliche Teilchengröße der Teilchen gleich wie oder größer als die Mittelströmung-Porengröße ist.

## Revendications

1. Séparateur pour une pile électrochimique comprenant des nanofibres disposées dans un voile non-tissé, et comprenant en outre un premier ensemble de particules thermoplastiques enduites sur la surface du voile non-tissé sous la forme d'une enduction qui recouvre au moins une partie de la surface du voile, le voile non-tissé présentant une porosité comprise entre 10 % et 90 % et une taille des pores à écoulement moyen comprise entre 0,1 micron et 5 microns, et les particules thermoplastiques ayant une taille des particules moyenne en nombre qui est au moins égale à la taille des pores à écoulement moyen.

2. Séparateur selon la revendication 1, dans lequel la taille des particules moyenne en nombre est au moins 5 fois la taille des pores à écoulement moyen.

3. Séparateur selon la revendication 1 ou 2, dans lequel les particules thermoplastiques présentent une apparition du point de fusion comprise entre 70°C et 180°C.

4. Séparateur selon l'une quelconque des revendications 1 à 3, dans lequel l'enduction comprend en outre un second ensemble de particules différent du premier ensemble de particules et les particules sont sélectionnées dans le groupe constitué des particules polymères, des particules non polymères, et de leurs mélanges.

5. Séparateur selon la revendication 4, dans lequel le second ensemble de particules présente une taille moyenne de particule au moins égale à la taille des pores à écoulement moyen et les particules présentent une apparition du point de fusion comprise entre 70°C et 160°C.

6. Séparateur selon la revendication 4 ou 5, dans lequel le second ensemble de particules présente une taille moyenne de particule d'au moins 5 fois la taille des pores à écoulement moyen.

7. Séparateur selon l'une quelconque des revendications 4 à 6, dans lequel le premier ensemble de particules et le second ensemble de particules sont mélangés à l'intérieur de l'enduction.

8. Séparateur selon l'une quelconque des revendications 1 à 7, dans lequel les particules sont fonctionnalisées.

9. Séparateur selon la revendication 1, dans lequel les particules sont des particules enduites, des particules à coeur-écorce, des particules bi-composées ou composées, ou dans lequel l'enduction est stabilisée en utilisant des particules de liaison, un oligomère ou un polymère dissous, ou une pulvérisation ou un film adhésif.

10. Séparateur selon l'une quelconque des revendications 4 à 9, dans lequel le premier et le second ensemble de particules sont disposés en couches discrètes séparées dans l'enduction.

11. Séparateur selon l'une quelconque des revendications 1 à 10, comprenant en outre une pluralité de voiles non-tissés distincts et discrets où les voiles non-tissés sont séparés l'un de l'autre par les particules thermoplastiques.

12. Séparateur selon l'une quelconque des revendications 1 à 11, dans lequel les particules présentent un indice d'acidité inférieur à 200 mg de KOH/g, ou dans lequel l'enduction ne contient aucuns tensioactifs ni agents de dispersion.

13. Pile électrochimique comprenant un séparateur selon l'une quelconque des revendications 1 à 12.

14. Batterie à ion lithium comprenant un séparateur selon l'une quelconque des revendications 1 à 12.

15. Procédé de fabrication d'un séparateur selon la revendication 1, comprenant l'application d'un premier ensemble de particules thermoplastiques sur une surface du voile non-tissé comprenant des nanofibres, les particules recouvrant au moins une partie de la surface du voile non-tissé pour former une enduction, le voile non-tissé présentant une porosité comprise entre 10 % et 90 % et une taille des pores à écoulement moyen comprise entre 0,1 micron et 5 microns, et la taille des particules moyenne en nombre des particules est égale ou supérieure à la taille des pores à écoulement moyen.
